# EUROPÄISCHE PATENTSCHRIFT

(11) **EP 4 430 144 B1**
(45) Veröffentlichungstag und Bekanntmachung des Hinweises auf die Patenterteilung: **31.12.2025**
(21) Anmeldenummer: 22813482.1
(22) Anmeldetag: 02.11.2022
(51) Int. Cl.: C10G 21/28

(54) **VERFAHREN UND VORRICHTUNG ZUR TRENNUNG EINES KOHLENWASSERSTOFFHALTIGEN EINSATZSTOFFSTROMS DURCH EXTRAKTIVDESTILLATION**
METHOD AND APPARATUS FOR SEPARATION OF A HYDROCARBON CHARGE BY EXTRACTIVE DISTILLATION
PROCÉDE ET APPAREIL DE SÉPARATION D'UNE CHARGE D'HYDROCARBURES PAR DISTILLATION EXTRACTIVE

(30) Priorität: 12.11.2021 DE 102021212776; 12.11.2021 BE 202105879
(43) Veröffentlichungstag der Anmeldung: 18.09.2024
(73) Patentinhaber: thyssenkrupp Uhde GmbH, 44141 Dortmund (DE); thyssenkrupp Uhde Engineering Services GmbH, 65812 Bad Soden am Taunus (DE); thyssenkrupp AG, 45143 Essen (DE)
(72) Erfinder: KLEIBER, Michael, 65795 Hattersheim (DE); BETTINGER, Simone, 65812 Bad Soden/Taunus (DE); SCHUCH, Frank, 44229 Dortmund (DE); GRATOWSKI, Martin, 60386 Frankfurt (DE); GEHRKE, Helmut, 59192 Bergkamen (DE)
(74) Vertreter: thyssenkrupp Intellectual Property GmbH
(86) Internationale Anmeldenummer: PCT/EP2022/080504
(87) Internationale Veröffentlichungsnummer: WO 2023/083656

(56) Entgegenhaltungen:
- EP-A1- 3 747 854
- WO-A1-99/11740
- US-A- 3 476 680

## Beschreibung

### Stand der Technik

Die Erfindung betrifft ein Verfahren zur Trennung eines kohlenwasserstoffhaltigen Einsatzstoffstroms durch Extraktivdestillation nach dem Oberbegriff des Anspruchs 1 und eine Vorrichtung nach dem Oberbegriff des Anspruchs 8.

Aromaten, insbesondere die einfachsten aromatischen Verbindungen Benzol, Toluol und Xylol, sind von großtechnischer Bedeutung als Zwischenprodukte für die chemische Industrie. Für die Gewinnung von Aromaten sind verschiedene technische Verfahren bekannt. Eine Verfahrensart, welche bei vergleichsweise geringen Kosten eine besonders hohe Reinheit des Aromaten-Produktstroms erreicht, ist die Gewinnung durch Extraktivdestillation aus einem kohlenwasserstoffhaltigen Einsatzstoffstrom. Als Einsatzstoffstrom kommen beispielsweise Rohbenzin, Pyrolysebenzin, Reformatbenzin oder auch Kokerei-Leichtöl in Betracht. Schwere Komponenten werden bevorzugt vor der Aromatengewinnung, beispielsweise durch Abtrennung der C₈₊-Fraktion, aus dem Einsatzstoffstrom entfernt.

Bei der Gewinnung von Aromaten durch Extraktivdestillation wird der Einsatzstoffstrom mit einem selektiven Lösungsmittel für Aromaten im Gegenstrom in Kontakt gebracht. Das Lösungsmittel beeinflusst die Flüchtigkeit der unterschiedlichen Bestandteile des Einsatzstoffstroms unterschiedlich stark. Die Flüchtigkeit der aromatischen Bestandteile wird durch die Verdünnung herabgesetzt, während die der aliphatischen Bestandteile deutlich erhöht wird. Auf diese Weise wird eine destillative Auftrennung in Aromaten und Nichtaromaten/Aliphaten ermöglicht. In einem ersten Schritt werden die im Lösungsmittel gelösten Aromaten dann mittels extraktiver Destillation von den aliphatischen Bestandteilen der Einsatzmischung getrennt, welche als Kopfprodukt der Destillation abgeführt werden. In einem zweiten Schritt werden die Aromaten durch Strippung als Kopfprodukt aus dem Lösungsmittel getrieben. Anschließend kann der Aromaten-Produktstrom in einzelne Aromatenfraktionen weiter aufgetrennt werden. Das an Aromaten abgereicherte Lösungsmittel wird in die extraktive Destillation zurückgeführt und wiederverwendet. Auf diese Weise lassen sich in einem kontinuierlichen Prozess einzelne Aromaten in Reinform gewinnen.

Als Lösungsmittel für die Extraktivdestillation sind unter anderem Sulfolan, Methylsulfolane, N-Methylpyrrolidon, N-Formylmorpholin, Ethylenglykol und deren Mischungen, sowie Mischungen aus den genannten Lösungsmitteln mit Wasser bekannt. Die verwendeten Lösungsmittel bzw. Lösungsmittelmischungen sind wasserlöslich.

Aufgrund der dauerhaften Wiederverwendung desselben Lösungsmittels in einem Lösungsmittelkreislauf sammeln sich Verunreinigungen, welche den Prozess weder als Kopfprodukt der destillativen Abtrennung der Aliphaten noch als Kopfprodukt bei der Strippung der Aromaten verlassen, im Lösungsmittel an. Durch das Bestreben der Betreiber, die Energieeffizienz der Anlagen zu optimieren und Betriebsmittel einzusparen, treten solche Verunreinigungen zunehmend auch im Einsatzstoffstrom von Anlagen auf, die allein der Gewinnung von Benzol und Toluol dienen. Insbesondere in Anlagen, welche nicht nur der Gewinnung von Benzol und Toluol, sondern zugleich auch der Gewinnung von Xylol dienen, ist eine Anreicherung solcher Verunreinigungen langfristig kaum zu vermeiden, da der Einsatzstoffstrom in diesem Fall einen größeren Anteil an höher siedenden Komponenten enthalten muss. Weiterhin können sich durch der Extraktivdestillation vorgeschaltete Prozesse, wie beispielsweise Clay-Treatment, schwere Komponenten eingebracht werden, die sich im Lösemittel anreichern. Aber auch aufgrund von Fehlbedienung oder Fehlfunktionen von der Extraktivdestillation vorgeschalteten Anlagenteilen, die beispielsweise der Entfernung höher siedender Anteile dienen, kann es zu einer erhöhten Kontamination des in der extraktiven Destillation umlaufenden Lösemittels mit schwersiedenden Verunreinigungen kommen.

Die Verunreinigungen führen im Laufe der Zeit dazu, dass das Lösungsmittel seine Extraktionskraft verliert und ausgetauscht werden muss. Um die mit dem Austausch des Lösungsmittels verbundenen Kosten zu reduzieren, ist die Möglichkeit einer Aufreinigung des Lösungsmittels im Lösungsmittelkreislauf wünschenswert, durch die die Verunreinigungen entfernt werden. Auf diese Weise kann die Zyklusdauer bis zum Austausch des Lösungsmittels erheblich verlängert werden.

Zur Aufreinigung des Lösungsmittels ist es beispielsweise aus US 2010/0228072 A1 bekannt, einen Teilstrom des Lösungsmittelkreislaufes einer Destillation zu unterziehen, wobei das aufgereinigte Lösungsmittel die Destillation als Kopfprodukt verlässt und als Destillationsrückstand zurückbleibende Verunreinigungen aus der Anlage entfernt werden. Nachteilig ist, dass mit dieser Art der Aufreinigung nur im Vergleich zu dem Lösungsmittel schwerer siedende Verunreinigungen aus dem Lösungsmittelkreislauf entfernt werden können. Verunreinigungen, die Mitsieder (engl. *co-boiler)* zu dem Lösungsmittel sind, d.h. einen eng benachbarten Siedepunkt aufweisen, verbleiben im Lösungsmittel.

Aus DE 10 2012 111 292 A1 ist es daher bekannt, einen Teilstrom des aus dem Sumpf der Stripper-Kolonne abgezogenen Extraktionsmittels mit Wasser zu versetzen und einer Destillationskolonne zuzuführen. In der Destillationskolonne erfolgt eine Trennung des Extraktionsmittels von dem zugesetzten Wasser und von in dem Extraktionsmittel gelösten Kohlenwasserstoffen. Wasser und Kohlenwasserstoffe werden über Kopf der Destillationskolonne abgeführt. Diese Art der Aufreinigung beruht darauf, dass sich das Extraktionsmittel im Wasser löst und die wasserunlöslichen Kohlenwasserstoffe so aus der Lösung im Extraktionsmittel verdrängt werden und eine leichter flüchtige Phase bilden, die sich destillativ mit dem Wasser abtrennen lässt. Nachteilig ist allerdings, dass eine große Menge Wasser eingesetzt werden muss, um das gesamte Extraktionsmittel zu behandeln. Anschließend muss das gesamte eingesetzte Wasser, zumindest im Falle einer Extraktivdestillation mit weitgehend wasserfreiem Lösungsmittel, wieder abdestilliert werden. Das bekannte Verfahren zur Aufreinigung des Lösungsmittels ist daher mit einem hohen Energie- und Kostenaufwand verbunden.

US 3 476 680 A beschreibt ein Extraktionsverfahren zur Trennung von Kohlenwasserstoffgemischen in ein Raffinatprodukt mit verminderter Aromatizität und ein Extraktprodukt mit erhöhter Aromatizität durch Kontakt mit dem Lösungsmittel N-Methyl-2-pyrrolidon in einem Extraktor. Die aus dem Extraktor abgezogene Extraktphase wird in einem Waschturm im Flüssig-Flüssig-Gegenstrom mit Wasser in Kontakt gebracht, um ein lösungsmittelfreies Extrakt-ölprodukt zu erhalten. Wasser, welches gelöstes NMP-Lösungsmittel und Öl enthält, wird zu einem weiteren Extraktor geleitet, wo es im Gegenstrom mit leichten Kohlenwasserstoffen in Kontakt gebracht wird, um das Öl zu extrahieren. Wasser und NMP-Lösungsmittel werden in einem Destillationsturm voneinander getrennt und zur wiederholten Benutzung zurückgeführt.

WO 99/11740 A1 beschreibt ein Trennverfahrens zur Abtrennung von Aromaten, bei der ein hybrides Extraktions-/Extraktivdestillationssystem eingesetzt wird. Ein Teil eines gemischten Kohlenwasserstoff-Einsatzmaterials wird zu einer separaten Extraktivdestillationskolonne (EDC) geleitet, die parallel zum Hauptextraktor, zum Extraktivstripper und zu den Wasserwaschvorgängen des Verfahrens arbeitet. Der Einsatz einer EDC ermöglicht die Rückgewinnung und Reinigung von aromatischen Verbindungen in einem einzigen Arbeitsgang. In dem beschriebenen Verfahren wird Wasserdampf als Strippmedium und optional Wasser als Zweit-Lösungsmittel eingesetzt.

Ein Verfahren und eine Vorrichtung nach den Oberbegriffen der Ansprüche 1 und 8 sind bekannt aus EP 3 747 854 A1. EP 3 747 854 A1 beschreibt ein Verfahren zur Abtrennung von aromatischen Kohlenwasserstoffen mittels Extraktivdestillation. Das Raffinat der Extraktivdestillation enthält bei dem beschriebenen Verfahren noch 5-40 Massen-% Benzol und wird einer Extraktionskolonne bodenseitig zugeführt, welcher Lösungsmittel als Extraktionsmittel im oberen Teil zugeführt wird. Nach Flüssig/Flüssig-Extraktion wird ein Raffinatstrom frei von aromatischen Kohlenwasserstoffen am Kopf der Extraktionskolonne abgezogen und das mit Benzol beladene Lösungsmittel wird in den oberen Mittelteil der Extraktivdestillationskolonne geführt. Der Raffinatstrom wird in einer Waschkolonne mit Wasser gewaschen, wobei das Waschwasser nach Entfernung von Spuren von nicht-aromatischen Kohlenwasserstoffen darin als Strippmedium zur Trennung der aromatischen Kohlenwasserstoffe von dem Lösungsmittel eingesetzt wird.

### Offenbarung der Erfindung

Aufgabe der Erfindung ist es daher, ein Verfahren und eine Vorrichtung zur Trennung eines kohlenwasserstoffhaltigen Einsatzstoffstroms durch Extraktivdestillation anzugeben, in denen die Selektivität und Kapazität des verwendeten Lösungsmittels über einen langen Zeitraum durch einen ressourcenschonenden Prozess sichergestellt wird.

Diese Aufgabe wird gelöst durch ein Verfahren zur Trennung eines kohlenwasserstoffhaltigen Einsatzstoffstroms durch Extraktivdestillation mit den Merkmalen des Anspruchs 1 und eine Vorrichtung mit den Merkmalen des Anspruchs 8.

Hierdurch wird ein Verfahren zur Trennung eines kohlenwasserstoffhaltigen Einsatzstoffstroms durch Extraktivdestillation in mindestens einen Aliphaten-Produktstrom und einen Aromaten-Produktstrom geschaffen, welches die folgenden Schritte umfasst:
- Inkontaktbringen des Einsatzstoffstroms mit einem wasserlöslichen Lösungsmittel für Aromaten im Gegenstrom,
- Destillatives Abtrennen einer Aliphatenfraktion aus dem erhaltenen Gemisch unter Verbleib des mit Aromaten angereicherten Lösungsmittels und Abführen der Aliphatenfraktion in dem Aliphaten-Produktstrom,
- Strippen der Aromaten aus dem mit Aromaten angereicherten Lösungsmittel und Abführen der Aromaten in dem Aromaten-Produktstrom
- Rückführen des an Aromaten abgereicherten Lösungsmittels in einem Lösungsmittelkreislauf zur Extraktion weiterer Aromaten aus dem Einsatzstoffstrom, wobei sich als Verunreinigungen aliphatische Verbindungen und/oder Verbindungen mit aliphatischen Resten in dem Lösungsmittelkreislauf ansammeln, und
- Aufreinigen zumindest eines Teilstroms des an Aromaten abgereicherten Lösungsmittels zur Entfernung der Verunreinigungen.

Erfindungsgemäß ist vorgesehen, dass zum Aufreinigen eine Flüssig-Flüssig-Extraktion zwischen dem Teilstrom und einem Extraktionsmittel für Aliphaten durchgeführt wird, wobei das Raffinat der Flüssig-Flüssig-Extraktion in den Lösungsmittelkreislauf zurückgeführt wird.

Der Teilstrom im Sinne der Erfindung kann einen beliebigen Anteil des gesamten Lösungsmittelkreislaufs umfassen. Insbesondere kann der Teilstrom auch der gesamte Lösungsmittelstrom im Lösungsmittelkreislauf sein. Bevorzugt ist ein Teilstrom in der Aufreinigung, der einem Anteil von 1 Massen-% bis 20 Massen-% am gesamten Lösungsmittelstrom im Lösungsmittelkreislauf entspricht.

Durch die Flüssig-Flüssig-Extraktion mit einem Extraktionsmittel für Aliphaten gehen die aliphatischen Verunreinigungen aus dem Lösungsmittel in das Extraktionsmittel über. Das Extraktionsmittel für Aliphaten kann darüber hinaus auch geeignet sein, andere Verunreinigungen, wie beispielsweise Naphthalin, zu extrahieren. Das Extrakt der Flüssig-Flüssig-Extraktion umfasst daher neben dem Extraktionsmittel die aliphatischen Verunreinigungen und ist gesättigt mit Lösungsmittel. Das Raffinat der Flüssig-Flüssig-Extraktion ist ein gereinigter Lösungsmittelstrom, welcher mit dem Extraktionsmittel gesättigt ist und für die Extraktivdestillation wiederverwendet werden kann. Das Massenverhältnis von Extraktionsmittel für Aliphaten zu Lösungsmittel beträgt vorzugsweise 1/20 bis 10/1, bevorzugt 1/10 bis 5/1 und besonders bevorzugt 1/5 bis 2/1.

Durch die Verwendung einer Flüssig-Flüssig-Extraktion zur Entfernung der aliphatischen Verunreinigungen mit einem Extraktionsmittel für Aliphaten werden somit die Verunreinigungen als Solvat aus dem Lösungsmittel entfernt. Bei bekannten Verfahren zur Aufreinigung mittels Zusatz von Wasser geht dagegen das Lösungsmittel selbst als Solvat in das Wasser über, während die Verunreinigungen eine aliphatische, wasserunlösliche Phase ausbilden. Erfindungsgemäß kann das Lösungsmittel somit ohne den Zusatz von Wasser in den aufzureinigenden Teilstrom gereinigt werden. Dies ist insbesondere bei Verfahren zur direkten, wasserfreien Darstellung der Aromaten von Vorteil, bei denen der Wassergehalt im Lösungsmittelkreislauf hinreichend gering gehalten werden muss, da auf eine anschließende energieintensive Entfernung des Wassers verzichtet werden kann.

Bevorzugt wird ein Extraktionsmittel für Aliphaten verwendet, welches bei der Extraktivdestillation über die Aliphatenfraktion aus dem Lösungsmittelkreislauf ausgetragen wird. Als derartiges Extraktionsmittel kommen beispielsweise Alkane, Alkan- bzw. Aliphatengemische, oder auch Oxygenate, wie **MTBE** oder **ETBE,** in Betracht. Bevorzugt handelt es sich bei dem Extraktionsmittel für Aliphaten um C5-C9 Kohlenwasserstoffe, vornehmlich Paraffine oder deren Isomere. Beimischungen von Aromaten und zyklischen Nichtaromaten (Naphthenen) im Extraktionsmittel sind ebenfalls denkbar. Insbesondere kann das Extraktionsmittel durch Abzweigung eines zweiten Teilstromes aus dem Aliphaten-Produktstrom gewonnen werden.

Alternativ ist der Einsatz eines Extraktionsmittels für Aliphaten denkbar, dessen Anreicherung im Lösungsmittelkreislauf bis zur Sättigungsgrenze die Selektivität und Kapazität des Lösungsmittels nur in einem tolerierbaren Maße beeinträchtigt.

Erfindungsgemäß werden zur Rückgewinnung von Lösungsmittel aus dem Extrakt der Flüssig-Flüssig-Extraktion die folgenden weiteren Schritte durchgeführt:
- Versetzen des Extraktes der Flüssig-Flüssig-Extraktion mit Wasser unter Ausbildung einer wässrigen, lösungsmittelhaltigen Phase und einer hydrophoben Phase,
- Abscheiden der wässrigen Phase von der hydrophoben Phase und
- Destillation der wässrigen Phase zur Abdestillation des Wassers, wobei das Sumpfprodukt der Destillation in den Lösungsmittelkreislauf zurückgeführt wird.
Das Massenverhältnis von Extrakt zu Wasser beträgt vorzugsweise 1/20 bis 40/1, bevorzugt 1/10 bis 30/1 und besonders bevorzugt 1/5 bis 20/1. Das Versetzen mit Wasser und das Abscheiden der wässrigen Phase erfolgt bevorzugt bei einer Temperatur im Bereich von 0°C bis 80°C und einem Druck von 0 bar bis 40 bar Überdruck.

Die Rückgewinnung des Lösungsmittels aus dem mit Lösungsmittel gesättigten Extrakt der Flüssig-Flüssig-Extraktion führt zu einem geringeren Lösungsmittelverbrauch und erleichtert die Weiterverarbeitung bzw. Entsorgung des Extrakts. Die Rückgewinnung des Lösungsmittels aus dem Extrakt stellt somit eine besonders kosten- und umweltschonende Variante des erfindungsgemäßen Verfahrens dar.

Wenn zur Rückgewinnung des Lösungsmittels nur der Extrakt der Flüssig-Flüssig-Extraktion und nicht der gesamte aufzureinigende Teilstrom mit Wasser versetzt wird, ist die einzusetzende Wassermenge deutlich reduziert, da der Extrakt einen um Größenordnungen geringeren Lösungsmittelanteil aufweist. Der für die Destillation der wässrigen Phase benötigte Energiebedarf ist somit gegenüber den bekannten, allein auf einer Wasserwäsche basierenden Verfahren zur Lösungsmittelreinigung wesentlich reduziert.

Das abdestillierte Wasser wird in einem Wasserkreislauf zurückgeführt und erneut dem Extrakt der Flüssig-Flüssig-Extraktion zugesetzt. Die Wiederverwendung des Wassers in einem Wasserkreislauf reduziert die anfallende Menge an behandlungspflichtigen Abwässern und stellt einen ressourcenschonen Betrieb sicher.

Ferner ist bevorzugt, dass der Teilstrom vor der Flüssig-Flüssig-Extraktion in einem Wärmetauscher abgekühlt wird und die Destillation unter Einsatz der im Wärmetauscher anfallenden Wärmeenergie durchgeführt wird. Für die Durchführung der Flüssig-Flüssig-Extraktion ist eine Temperatur des Teilstroms im Bereich von 0°C bis 80°C vorteilhaft und ein Druck von 0 bis 40 bar Überdruck bevorzugt. Die Extraktion bei im Vergleich zur Temperatur der Strippung (ca. 160°C-240°C) niedriger Temperatur ist bevorzugt, da hierdurch die Löslichkeit der Verunreinigungen und des Extraktionsmittels für Aliphaten im Lösungsmittel reduziert ist. Zu geringe Temperaturen sind zu vermeiden, insbesondere um ein Erstarren des Lösungsmittels zu verhindern. Die bei der Abkühlung des Teilstroms im Wärmetauscher anfallende Energiemenge ist in der Regel mehr als ausreichend für die Durchführung der Destillation. Überschüssige Wärmeenergie kann genutzt werden, um das in den Lösungsmittelkreislauf zurückzuführende Lösungsmittel aufzuheizen. Alternativ oder zusätzlich kann Wärmeenergie aus dem Hauptstrom des Lösungsmittelkreislaufs zum Betrieb der Destillationskolonne entnommen werden.

Vorzugsweise wird die Destillation mit einem Kopfdruck von kleiner 1 bar (a), insbesondere bevorzugt kleiner 500 mbar (a) und besonders bevorzugt kleiner 100 mbar (a) durchgeführt. Bei Durchführung der Destillation in einem Vakuum wird der Siedepunkt des Wassers gesenkt und so die Temperatur im Destillationssumpf reduziert. Dadurch kann die für die Destillation erforderliche Energiemenge reduziert werden und es werden unerwünschte Nebenreaktionen im Destillationssumpf vermieden. Bevorzugt wird das Vakuum so eingestellt, dass die Sumpftemperatur in einem Bereich bis höchstens 230°C, besonders bevorzugt zwischen 150°C und 200°C liegt.

Nachdem der Extrakt der Flüssig-Flüssig-Extraktion mit Wasser versetzt und die wässrige Phase abgeschieden wurde, liegt eine hydrophobe Phase vor, die Extraktionsmittel und die Verunreinigungen enthält. In bevorzugten Ausführungsformen des Verfahrens ist vorgesehen, dass ein Abtrennen der Verunreinigungen aus der hydrophoben Phase durchgeführt wird. Das Abtrennen der Verunreinigungen ist wünschenswert, wenn die Verunreinigungen für nachfolgende Prozesse oder die Produktreinheit störend sind.

Das Abtrennen der Verunreinigungen ist insbesondere vorteilhaft, wenn die hydrophobe Phase als Extraktionsmittel für Aliphaten in einem Extraktionsmittelkreislauf in die Flüssig-Flüssig-Extraktion zurückgeführt wird. Ein Abtrennen der Verunreinigungen kann abhängig von den Produktanforderungen jedoch auch gewünscht sein, wenn die hydrophobe Phase dem Aliphaten-Produktstrom zugeführt wird.

Sowohl die Flüssig-Flüssig-Extration zur Extraktion der Aliphaten aus dem Lösemittel als auch die destillative Trennung von Wasser und Lösemittel können jeweils kontinuierlich oder absatzweise betrieben werden.

Das erfindungsgemäße Verfahren ist besonders vorteilhaft einsetzbar bei der direkten Darstellung wasserfreier Aromaten. Wasserfrei im Sinne dieser Offenbarung bedeutet, dass der Wassergehalt der Aromatenfraktion nach der Extraktivdestillation unmittelbar den Anforderungen an das Reinprodukt genügt und keine der Extraktivdestillation nachgelagerten Trocknungsschritte durchgeführt werden müssen. Insbesondere ist es dann nicht notwendig, eine separate Wasserphase aus der kondensierten Aromatenfraktion abzutrennen In solchen Verfahren hat das Lösungsmittel im Lösungsmittelkreislauf (Sumpf der Stripper-Kolonne) üblicherweise einen Wassergehalt von kleiner 1 Massen-%, bevorzugt kleiner 0,5 Massen-% und besonders bevorzugt kleiner 1000 ppm. Des Weiteren wird bei dieser Variante auch kein Dampf der Stripper Kolonne zugesetzt, da dieser zu einem erhöhten Wassergehalt in der Aromatenfraktion führen würde.

Als Lösungsmittel für die Extraktivdestillation kommen unter anderen Sulfolan, Methylsulfolane, N-Methylpyrrolidon, N-Formylmorpholin, Ethylenglykol und deren Mischungen, sowie Mischungen aus den genannten Lösungsmitteln mit Wasser in Betracht. Besonders bevorzugt enthält das Lösungsmittel N-Formylmorpholin, welches sich insbesondere für die direkte Darstellung von wasserfreien Aromaten eignet.

Vorrichtungsmäßig wird die Aufgabe durch eine Vorrichtung zur Trennung eines kohlenwasserstoffhaltigen Einsatzstoffstroms durch Extraktivdestillation in mindestens einen Aliphaten-Produktstrom und einen Aromaten-Produktstrom gelöst, umfassend:
- eine Einrichtung zum Inkontaktbringen des Einsatzstoffstroms mit einem wasserlöslichen Lösungsmittel für Aromaten im Gegenstrom,
- eine Einrichtung zum destillativen Abtrennen einer Aliphatenfraktion aus dem erhaltenen Gemisch unter Verbleib des mit Aromaten angereicherten Lösungsmittels mit einer Abführung für die Aliphatenfraktion als Aliphaten-Produktstrom,
- eine Einrichtung zum Strippen der Aromaten aus dem mit Aromaten angereicherten Lösungsmittel mit einer Abführung für die Aromaten als Aromaten-Produktstrom,
- eine Rückführung für das an Aromaten abgereicherte Lösungsmittel in einem Lösungsmittelkreislauf zu der Einrichtung zum Inkontaktbringen des Einsatzstoffstroms mit Lösungsmittel, sowie
- eine Aufreinigungseinrichtung für das Lösungsmittel, die in dem Lösungsmittelkreislauf angeordnet ist und im Betrieb zumindest zeitweise zumindest von einem Teilstrom des an Aromaten abgereicherten Lösungsmittels durchlaufen wird, zur Entfernung von Verunreinigungen umfassend aliphatische Verbindungen und/oder Verbindungen mit aliphatischen Resten aus dem Teilstrom.

Erfindungsgemäß enthält die Aufreinigungseinrichtung eine Zuführung für ein Extraktionsmittel für Aliphaten und zumindest eine Mischkammer und eine Trennkammer für eine Flüssig-Flüssig-Extraktion zwischen dem Teilstrom und einem Extraktionsmittel für Aliphaten. Ferner weist die Aufreinigungseinrichtung eine Rückführung für ein Raffinat der Flüssig-Flüssig-Extraktion in den Lösungsmittelkreislauf auf.

Die Aufreinigungsvorrichtung weist eine Abführung für einen Extrakt der Flüssig-Flüssig-Extraktion auf, die mit einer Lösungsmittel-Rückgewinnungseinrichtung verbunden ist. In der Lösungsmittel-Rückgewinnungseinrichtung sind mindestens eine Mischvorrichtung für den Zusatz von Wasser unter Ausbildung einer wässrigen Phase und einer hydrophoben Phase und mindestens eine Scheidevorrichtung zur Abscheidung der wässrigen Phase von der hydrophoben Phase angeordnet. Die Lösungsmittel-Rückgewinnungseinrichtung weist ferner eine Abführung für die wässrige Phase auf, die mit einer Destillationskolonne zur Abdestillation des Wassers verbunden ist. Die Destillationskolonne weist eine Abführung für ein Sumpfprodukt der Destillationskolonne auf, über die das Sumpfprodukt in den Lösungsmittelkreislauf zurückführbar ist.

Die Destillationskolonne weist ferner eine Kopfabführung für das abdestillierte Wasser auf, die unter Ausbildung eines Wasserkreislaufs mit der Mischvorrichtung für den Zusatz von Wasser verbunden ist.

Ferner ist bevorzugt stromaufwärts der Aufreinigungsvorrichtung mindestens ein Wärmetauscher zur Abkühlung des Teilstroms angeordnet ist, der mit der Destillationskolonne zur Übertragung der in dem Wärmetauscher anfallenden Wärmeenergie verbunden.

In bevorzugten Ausführungsformen ist die Destillationskolonne mit einer Vakuumerzeugungseinrichtung verbunden, die dazu eingerichtet ist, einen Unterdruck von kleiner 1 bar (a), bevorzugt kleiner 500 mbar (a) und besonders bevorzugt kleiner 100 mbar (a) in einem Kopfbereich der Destillationskolonne zu erzeugen.

In weiteren bevorzugten Ausführungsformen ist eine Trenneinrichtung zur Abtrennung der Verunreinigungen aus der hydrophoben Phase vorgesehen. Die Trenneinrichtung kann beispielsweise eine weitere Destillationseinrichtung, beispielsweise eine Destillationskolonne sein. Bevorzugt ist die Trenneinrichtung unter Ausbildung eines Extraktionsmittelkreislaufs mit der Zuführung der Aufreinigungseinrichtung verbunden.

Weitere vorteilhafte Ausführungsformen sind der nachfolgenden Beschreibung und den Unteransprüchen zu entnehmen.

Die Erfindung wird nachstehend anhand der in den beigefügten Abbildungen dargestellten Ausführungsbeispiele näher erläutert.

### Kurzbeschreibung der Zeichnungen

- Fig. 1: zeigt schematisch ein Ablaufdiagramm des erfindungsgemäßen Verfahrens nach einem ersten Ausführungsbeispiel, bei dem ein zweiter Teilstrom von dem Aliphaten-Produktstrom als Extraktionsmittel für Aliphaten abgezweigt und die hydrophobe Phase dem Aliphaten-Produktstrom zugeführt wird,
- Fig. 2: zeigt schematisch ein Ablaufdiagramm des erfindungsgemäßen Verfahrens nach einem zweiten Ausführungsbeispiel, bei dem die Verunreinigungen aus dem Extraktionsmittel für Aliphaten abgetrennt und das Extraktionsmittel in einem Extraktionsmittelkreislauf geführt wird,
- Fig. 3: zeigt schematisch ein erstes Ausführungsbeispiel der erfindungsgemäßen Vorrichtung, welches geeignet ist, das in Fig. 1 gezeigte Verfahren auszuführen,
- Fig. 4: zeigt schematisch ein zweites Ausführungsbeispiel der erfindungsgemäßen Vorrichtung, welches geeignet ist, das in Fig. 2 gezeigte Verfahren auszuführen
- Fig. 5: zeigt schematisch einen zu dem Ausschnitt X in Fig. 3 und 4 alternativen apparativen Aufbau zur Durchführung der Extraktivdestillation in einer einzigen Kolonne für Extraktivdestillation,
- Fig. 6: zeigt schematisch einen zu dem Ausschnitt X in Fig. 3 und 4 alternativen apparativen Aufbau zur Durchführung der Extraktivdestillation in drei voneinander getrennten Kolonnen.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

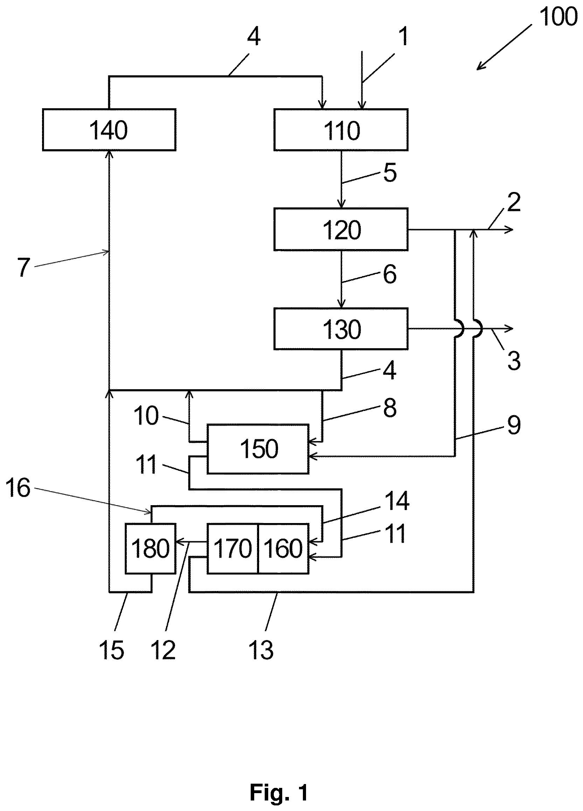

In Fig. 1 ist ein Ablaufdiagramm des erfindungsgemäßen Verfahrens 100 nach einem ersten Ausführungsbeispiel der Erfindung gezeigt. Bei dem Verfahren 100 wird ein kohlenwasserstoffhaltiger Einsatzstoffstrom 1 durch Extraktivdestillation in mindestens einen Aliphaten-Produktstrom 2 und einen Aromaten-Produktstrom 3 getrennt.

Das Verfahren 100 umfasst die folgenden Schritte:
Im Schritt 110 wird der Einsatzstoffstrom 1 mit einem wasserlöslichen Lösungsmittel 4 für Aromaten im Gegenstrom in Kontakt gebracht und es entsteht ein Gemisch 5. Anschließend wird in Schritt 120 eine Aliphatenfraktion aus dem erhaltenen Gemisch 5 unter Verbleib des mit Aromaten angereicherten Lösungsmittels 6 destillativ abgetrennt und die Aliphatenfraktion wird in dem Aliphaten-Produktstrom 2 abgeführt. Nachfolgend erfolgt in Schritt 130 ein Strippen der Aromaten 130 aus dem mit Aromaten angereicherten Lösungsmittel 6 und ein Abführen der Aromaten in dem Aromaten-Produktstrom 3. Das Strippen erfolgt bevorzugt bei einer im Vergleich zur destillativen Abtrennung der Aliphatenfraktion erhöhten Temperatur und/oder niedrigerem Druck. Das an Aromaten abgereicherte Lösungsmittel 4 wird in Schritt 140 in einem Lösungsmittelkreislauf 7 zur Extraktion weiterer Aromaten aus dem Einsatzstoffstrom 1 zurückgeführt.

Bei der Durchführung des Verfahrens 100 reichern sich aliphatische Verbindungen und/oder Verbindungen mit aliphatischen Resten als Verunreinigungen in dem Lösungsmittelkreislauf 7 an. Deshalb ist in Schritt 150 ein Aufreinigen zumindest eines Teilstroms 8 des an Aromaten abgereicherten Lösungsmittels 4 zur Entfernung der Verunreinigungen vorgesehen. Zum Aufreinigen 150 wird eine Flüssig-Flüssig-Extraktion zwischen dem Teilstrom 8 und einem Extraktionsmittel 9 für Aliphaten durchgeführt, wobei das Raffinat 10 der Flüssig-Flüssig-Extraktion in den Lösungsmittelkreislauf 7 zurückgeführt wird. Vorzugsweise werden der Teilstrom 8 und das Extraktionsmittel 9 für Aliphaten für die Flüssig-Flüssig-Extraktion im Gegenstrom zueinander geführt.

Es kann vorgesehen sein, dass das Aufreinigen 150 des Lösungsmittels 4 nur zeitweilig während der Durchführung des Verfahrens erfolgt. Dafür kann der Teilstrom 8 beispielsweise über ein Steuerventil steuerbar sein. Der Volumenstrom des Teilstrom 8 wird vorzugsweise so geregelt, dass die Verunreinigungen im Lösungsmittel auf einen Sollwert oder Sollbereich eingeregelt werden. Der Sollwert oder Sollbereich der Verunreinigungen im Lösungsmittel liegt vorzugsweise im Bereich von 0,1-20 Massen-%, bevorzugt, 0,1-10 Massen-% und besonders bevorzugt 1- 5 Massen-%. Auf diese Weise können die zur Sicherstellung einer hervorragenden Selektivität und Kapazität des Lösungsmittels benötigten Betriebsmittelverbräuche reduziert werden.

In dem Ausführungsbeispiel nach Fig. 1 ist ferner eine Rückgewinnung von Lösungsmittel aus dem Extrakt 11 der Flüssig-Flüssig-Extraktion vorgesehen. Zu diesem Zweck werden die folgenden weiteren Schritte durchgeführt:
In Schritt 160 wird der Extraktes 11 der Flüssig-Flüssig-Extraktion mit Wasser 14 versetzt unter Ausbildung einer wässrigen, lösungsmittelhaltigen Phase 12 und einer hydrophoben Phase 13. Anschließend erfolgt in Schritt 170 ein Abscheiden der wässrigen Phase 12 von der hydrophoben Phase 13. Schließlich ist in Schritt 180 eine Destillation der wässrigen Phase 12 zur Abdestillation des Wassers vorgesehen, wobei das Sumpfprodukt 15 der Destillation 180 in den Lösungsmittelkreislauf 7 zurückgeführt wird.

Die Destillation 180 wird bevorzugt mit einem Kopfdruck von kleiner 1 bar (a), weiter bevorzugt kleiner 500 mbar (a) und besonders bevorzugt kleiner 100 mbar (a) durchgeführt. Die Sumpftemperaturen der Destillation 180 werden bevorzugt im Bereich kleiner 230°C, bevorzugt im Bereich 150-200°C eingestellt.

Ferner ist vorgesehen, dass das abdestillierte Wasser 14 in einem Wasserkreislauf 16 zurückgeführt und erneut dem Extrakt 11 der Flüssig-Flüssig-Extraktion zugesetzt wird. Die hydrophobe Phase 13 kann, wie in Fig. 1 gezeigt, dem Aliphaten-Produktstrom 2 zugeführt werden. Vor der Zuführung zu dem Aliphaten-Produktstrom 2 kann in einigen Ausführungsformen eine Abtrennung der Verunreinigungen aus der hydrophoben Phase erfolgen. Alternativ kann die hydrophobe Phase 13 auch als ein gesonderter Strom an die Anlagengrenze abgeführt werden (nicht dargestellt).

Bevorzugt kann zur Energieeinsparung vorgesehen sein, dass der Teilstrom 8 vor der Flüssig-Flüssig-Extraktion in einem Wärmetauscher abgekühlt wird und die Destillation unter Einsatz der im Wärmetauscher anfallenden Wärmeenergie durchgeführt wird.

Das Lösungsmittel 4 im Lösungsmittelkreislauf 7 hat vorzugsweise einen Wassergehalt von kleiner 3 Massen-%, weiter bevorzugt kleiner 1 Massen-% und besonders bevorzugt kleiner 1000 ppm.

In bevorzugten Verfahrensvarianten enthält das Lösungsmittel 4, 6 N-Formylmorpholin. Besonders bevorzugt enthält das Lösungsmittel 4 einen Massenanteil von mindestens 50 % N-Formylmorpholin.

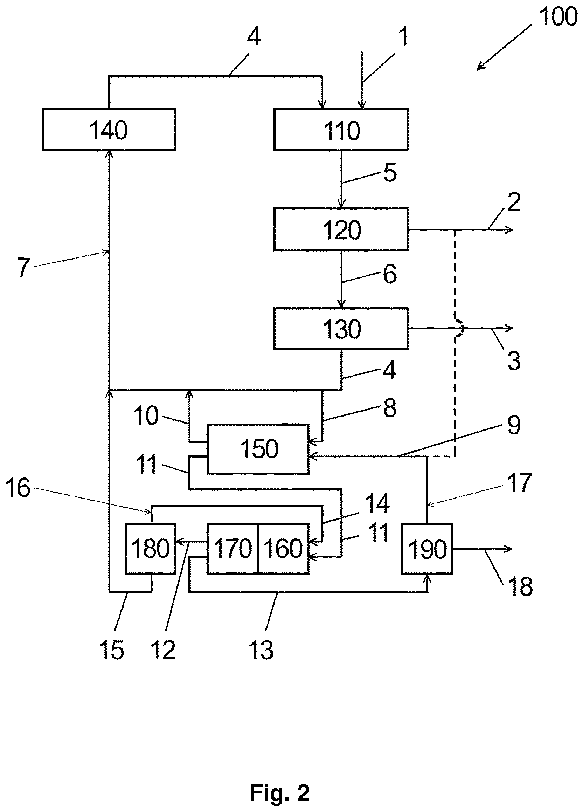

**In** **Fig.** 2 ist ein Ablaufdiagramm des erfindungsgemäßen Verfahrens nach einem zweiten Ausführungsbeispiel gezeigt. Das Ablaufdiagramm unterscheidet sich von Fig. 1 nur durch die Führung des Extraktionsmittels 9. In dem zweiten Ausführungsbeispiel wird die hydrophobe Phase 13 als Extraktionsmittel 9 für Aliphaten in einem Extraktionsmittelkreislauf 17 in die Flüssig-Flüssig-Extraktion zurückgeführt. Das Extraktionsmittel wird somit wiederverwendet. Um eine dauerhafte Wiederverwendung des Extraktionsmittels ohne Austausch des Extraktionsmittels zu ermöglichen, sieht das zweite Ausführungsbeispiel ferner ein Abtrennen 190 der Verunreinigungen aus der hydrophoben Phase 13 vor der Rückführung in die Flüssig-Flüssig-Extraktion vor. Die abgetrennten Verunreinigungen 18 können gesondert abgeführt und entsorgt oder einem Strom beigemischt werden, dessen Spezifikation nicht durch die beigemischten Verunreinigungen verletzt wird.

Das Extraktionsmittel 9 kann beispielsweise durch Abführung aus dem Aliphaten-Produktstrom 2 gewonnen werden. Alternativ können andere Aliphaten, beispielsweise Alkane, aber auch Oxygenate wie MTBE und ETBE als Extraktionsmittel 9 verwendet werden, welche separat vom Aliphaten-Produktstrom 2 zur Verfügung gestellt werden. Da stets ein gewisser Teil des Extraktionsmittels über das Raffinat 12 und das Sumpfprodukt 15 aus dem Extraktionsmittelkreislauf 17 ausgetragen wird, wird von Zeit zu Zeit ein Nachfüllen des Extraktionsmittels 9 durchgeführt.

Im Übrigen gelten die vorstehenden Ausführungen zu dem in Fig. 1 gezeigten Ausführungsbeispiel für Fig. 2 entsprechend.

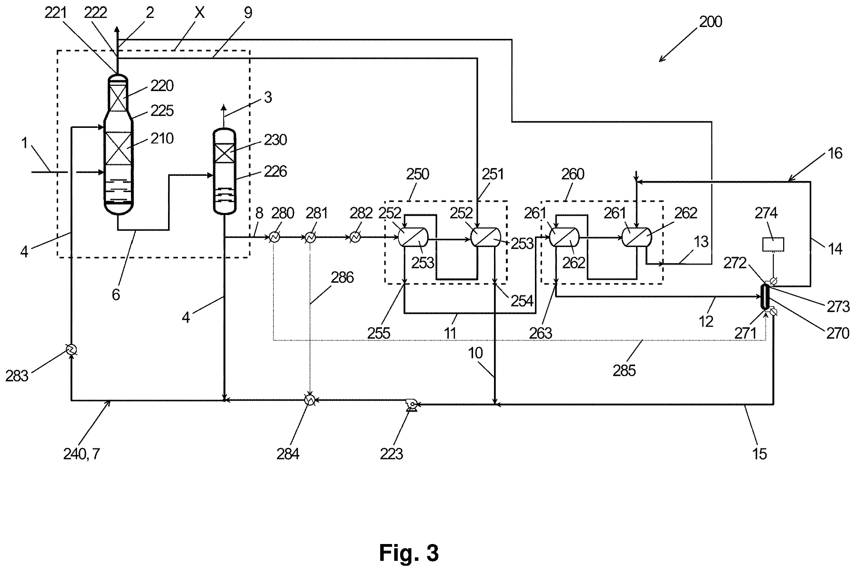

In **Fig.** 3 ist erstes Ausführungsbeispiel der erfindungsgemäßen Vorrichtung zur Trennung eines kohlenwasserstoffhaltigen Einsatzstoffstroms 1 durch Extraktivdestillation in mindestens einen Aliphaten-Produktstrom 2 und einen Aromaten-Produktstrom 3 gezeigt. Die Vorrichtung umfasst eine Einrichtung 210 zum Inkontaktbringen des Einsatzstoffstroms mit einem wasserlöslichen Lösungsmittel 4 für Aromaten im Gegenstrom, eine Einrichtung zum destillativen Abtrennen einer Aliphatenfraktion 220 aus dem erhaltenen Gemisch 5 unter Verbleib des mit Aromaten angereicherten Lösungsmittels 6 mit einer Abführung 221 für die Aliphatenfraktion als Aliphaten-Produktstrom 2 und eine Einrichtung zum Strippen 230 der Aromaten aus dem mit Aromaten angereicherten Lösungsmittel 6 mit einer Abführung für die Aromaten als Aromaten-Produktstrom.

Die Vorrichtung umfasst ferner eine Rückführung 240 für das an Aromaten abgereicherte Lösungsmittel 4 in einem Lösungsmittelkreislauf 7 zu der Einrichtung 210 zum Inkontaktbringen des Einsatzstoffstroms 1 mit Lösungsmittel 4 im Gegenstrom, sowie eine Aufreinigungseinrichtung 250 für das Lösungsmittel 4, die in dem Lösungsmittelkreislauf 7 angeordnet ist und im Betrieb zumindest von einem Teilstrom 8 des an Aromaten abgereicherten Lösungsmittels 4 durchlaufen wird, zur Entfernung von Verunreinigungen umfassend aliphatische Verbindungen und/oder Verbindungen mit aliphatischen Resten aus dem Teilstrom 8.

Die Aufreinigungseinrichtung 250 weist eine Zuführung 251 für ein Extraktionsmittel 9 für Aliphaten und zumindest eine Mischkammer 252 und eine Trennkammer 253 für eine Flüssig-Flüssig-Extraktion zwischen dem Teilstrom 8 und einem Extraktionsmittel 9 für Aliphaten auf. Die Aufreinigungseinrichtung 250 weist ferner eine Rückführung 254 für ein Raffinat 10 der Flüssig-Flüssig-Extraktion in den Lösungsmittelkreislauf 7 auf. Das Raffinat 10 kann dem Lösungsmittelkreislauf 7 beispielsweise über eine Pumpe 223 zugeführt werden.

Bei dem in Fig. 3 dargestellten Ausführungsbeispiel ist die Aufreinigungseinrichtung 250 mit einer zweistufigen Flüssig-Flüssig-Extraktion mit zwei Mischkammern 252 und zwei Trennkammern 253 ausgestattet. Grundsätzlich sind auch eine einstufige oder auch eine mehr als zweistufige Flüssig-Flüssig-Extraktion einsetzbar. Bei mehrstufigen Flüssig-Flüssig-Extraktionen wird das Lösungsmittel in jeder Stufe erneut in einer Mischkammer 252 der jeweiligen Stufe mit Extraktionsmittel versetzt und von diesem in einer Trennkammer 253 der jeweiligen Stufe wieder getrennt. Vorzugsweise werden Lösungsmittel und Extraktionsmittel dabei in den einzelnen Stufen im Gegenstrom geführt. Besonders bevorzugt dient als Extraktionsmittel einer Stufe der Extrakt aus der nachfolgenden Stufe. Der Extrakt 11 der Flüssig-Flüssig-Extraktion wird bei einer solchen mehrstufigen Extraktion durch den Extrakt der in Fließrichtung des Lösungsmittels 8 ersten Stufe gebildet. Bei einer mehrstufigen Flüssig-Flüssig-Extraktion kann also sowohl eine Prozessführung im Kreuzstrom als auch im Gegenstrom gewählt werden.

Wie in Fig. 3 dargestellt, können die Mischkammer 252 und die Trennkammer 253 innerhalb desselben Gefäßes ausgebildet sein, beispielsweise als Mixer-Settler-Einheit oder auch als ein- oder mehrstufige Extraktionskolonne. Die Begriffe Mischkammer 252 und Trennkammer 253 bezeichnen dann verschiedene Abschnitte derselben Kavität, die im Betrieb, die jeweils namensgebende Funktion erfüllen.

Die Aufreinigungsvorrichtung 250 weist ferner eine Abführung 255 für den Extrakt 11 der Flüssig-Flüssig-Extraktion auf, die mit einer Lösungsmittel-Rückgewinnungseinrichtung 260 verbunden ist. In der Lösungsmittel-Rückgewinnungseinrichtung 260 sind mindestens eine Mischvorrichtung 261 für den Zusatz von Wasser 14 unter Ausbildung einer wässrigen Phase 12 und einer hydrophoben Phase 13 und mindestens eine Scheidevorrichtung 262 zur Abscheidung der wässrigen Phase 12 von der hydrophoben Phase 13 angeordnet.

Die Lösungsmittel-Rückgewinnungseinrichtung 260 kann ein- oder mehrstufig ausgebildet sein. Die Mischvorrichtung 261 kann zusammen mit der Scheidevorrichtung 262 in einem Gefäß ausgebildet sein, beispielsweise einer Mixer-Settler-Einheit oder auch als ein- oder mehrstufige Extraktionskolonne. Die Mischvorrichtung 261 kann aber auch lediglich durch eine Rohrleitungsverzweigung gebildet sein, über die Wasser in den Strom des Extrakts 11 eingespeist werden kann.

Vorzugsweise werden Extrakt 11 und Wasser 14 in der Lösungsmittel-Rückgewinnungseinrichtung 260 im Gegenstrom geführt. Besonders bevorzugt erfolgt bei mehrstufigen Rückgewinnungseinrichtungen 260 der Zusatz von Wasser 14 durch Zusatz der wässrigen Phase 12 der jeweils nachfolgenden Stufe. Auf diese Weise reichert sich das Lösungsmittel in der wässrigen Phase gegenläufig zur Konzentration des Lösungsmittels in der hydrophoben Phase 13 über die Stufen hinweg an. Der Einsatz von frischem bzw. aufbereitetem Wasser kann dadurch reduziert werden.

Die Lösungsmittel-Rückgewinnungseinrichtung 260 weist eine Abführung 263 für die wässrige Phase 12 auf, die mit einer Destillationskolonne 270 zur Abdestillation des Wassers 14 verbunden ist. Die Destillationskolonne 270 hat eine Abführung 271 für ein Sumpfprodukt 15 der Destillationskolonne 270, über die das Sumpfprodukt 15 in den Lösungsmittelkreislauf 7 zurückführbar ist.

Die Destillationskolonne 270 weist ferner eine Kopfabführung 272 für das abdestillierte Wasser 14 auf, die unter Ausbildung eines Wasserkreislaufs 16 mit der Mischvorrichtung 261 für den Zusatz von Wasser 14 verbunden ist.

Die Destillationskolonne 270 ist vorzugsweise mit einer Vakuumerzeugungseinrichtung 274 verbunden, die dazu eingerichtet ist, einen Unterdruck von kleiner 1 bar (a), bevorzugt kleiner 500 mbar (a) und besonders bevorzugt kleiner 100 mbar (a) in einem Kopfbereich 273 der Destillationskolonne 270 zu erzeugen.

Bevorzugt ist eine Wärmeintegration der Destillationskolonne 270 vorgesehen. Dazu kann stromaufwärts der Aufreinigungsvorrichtung 250 mindestens ein Wärmetauscher 280 zur Abkühlung des Teilstroms 8 angeordnet sein, der mit der Destillationskolonne 270 zur Übertragung der in dem Wärmetauscher 280 anfallenden Wärmeenergie 285 verbunden ist. Besonders bevorzugt wird der gesamte Energiebedarf der Destillationskolonne 270 durch die übertragene Wärmeenergie 285 gedeckt.

Die Abkühlung des Teilstroms 8 vor Eintritt in die Aufreinigungsvorrichtung 250 erfolgt bevorzugt bis in einen Temperaturbereich von 0 °C bis 60 °C. Hierfür können weitere Wärmetauscher 281, 282 vorgesehen sein, die bevorzugt dem Wärmetauscher 280 im Teilstrom 8 nachfolgend angeordnet sind. Die zusätzlich in diesen Wärmetauschern 281, 282 anfallende Wärmeenergie 286 kann beispielsweise zur Aufheizung des Lösungsmittelstroms aus Raffinat 10 und Sumpfprodukt 15 verwendet werden, bevor dieser in den Lösungsmittelkreislauf 7 zurückgeführt wird. Alternativ oder zusätzlich kann die Wärmeenergie auch an anderen Stellen im Prozess der Extraktivdestillation verwendet werden.

Nach Austritt aus der Lösungsmittel-Rückgewinnungseinrichtung 260 kann die hydrophobe Phase 13 in den Aliphaten-Produktstrom 2 abgeführt werden. In der Abführung kann eine Trenneinrichtung zur Abtrennung der Verunreinigungen (nicht dargestellt) aus der hydrophoben Phase 13 vorgesehen sein. Die Trenneinrichtung kann beispielsweise durch eine weitere Destillationskolonne gebildet sein. Alternativ dazu verlassen die Verunreinigungen die Vorrichtung 200 über den Aliphaten-Produktstrom 2.

Bei dem in Fig. 3 dargestellten Ausführungsbeispiel ist der Hauptprozess der Extraktivdestillation im Ausschnitt X dargestellt. Dabei sind die Einrichtung zum Inkontaktbringen im Gegenstrom 210 und die Einrichtung zum destillativen Abtrennen 220 in einer Kolonne zur Extraktivdestillation 225 zusammengefasst und für die Einrichtung zum Strippen 230 ist eine separate Stripper-Kolonne 226 vorgesehen.

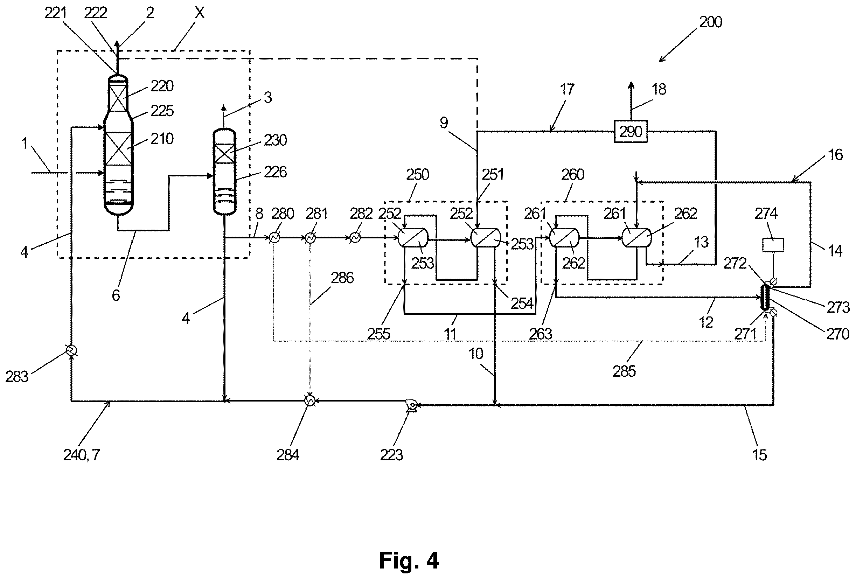

**Fig.** 4 zeigt ein zweites Ausführungsbeispiel der erfindungsgemäßen Vorrichtung. Das zweite Ausführungsbeispiel unterscheidet sich von dem in Fig. 3 gezeigten ersten Ausführungsbeispiel dadurch, dass eine Trenneinrichtung 290 zur Abtrennung der Verunreinigungen aus der hydrophoben Phase 13 vorgesehen ist. Die Trenneinrichtung 290 ist unter Ausbildung eines Extraktionsmittelkreislaufs 17 mit der Zuführung 251 der Aufreinigungseinrichtung 250 verbunden. Die abgetrennten Verunreinigungen 18 können gesondert abgeführt und entsorgt oder einem Strom beigemischt werden, dessen Spezifikation nicht durch die beigemischten Verunreinigungen verletzt wird.

Im Übrigen gelten die Ausführungen zum ersten in Fig. 3 gezeigten Ausführungsbeispiel für Fig. 4 entsprechend.

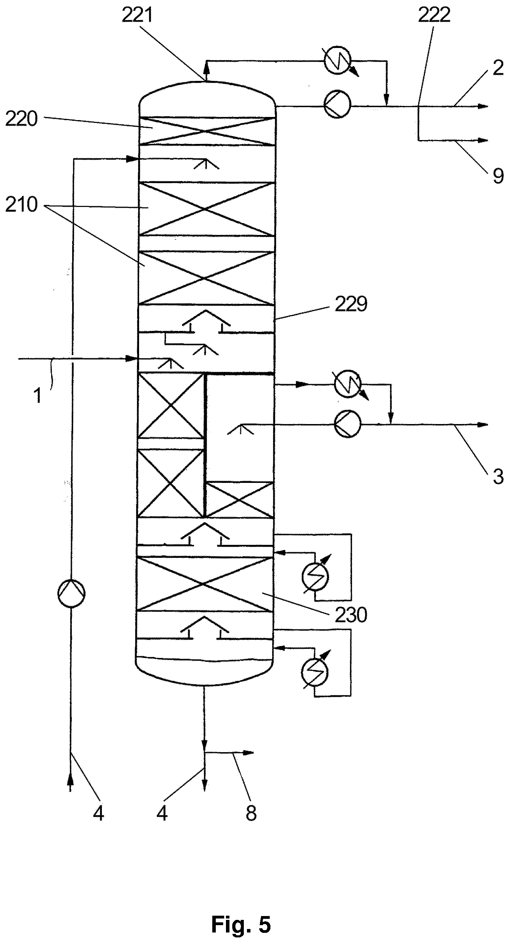

**Fig.** 5 zeigt einen alternativen apparativen Aufbau für den Ausschnitt X in den Vorrichtungen gemäß Fig. 3 und 4. Bei dem in Fig. 5 dargestellten Aufbau sind die Einrichtung zum Inkontaktbringen im Gegenstrom 210, die Einrichtung zum destillativen Abtrennen 220 und die Einrichtung zum Strippen 230 in einer einzigen Kolonne zur Extraktivdestillation 229 mit integrierter Strippung zusammengefasst. Vorzüge dieses Aufbaus sind ein geringerer apparativer Aufwand und ein geringerer Platzbedarf der Vorrichtung 200.

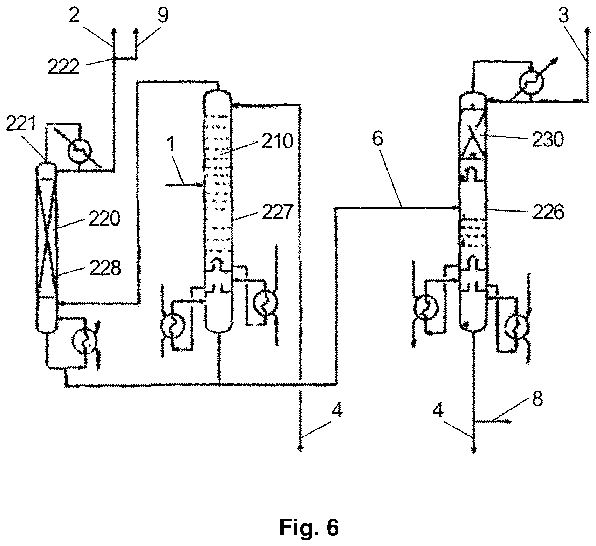

**Fig.** 6 zeigt einen weiteren alternativen apparativen Aufbau für den Ausschnitt X in den Vorrichtungen gemäß Fig. 3 und 4. Bei dem in Fig. 6 dargestellten Aufbau sind für die Einrichtung zum Inkontaktbringen im Gegenstrom 210 eine Kolonne zur Extraktivdestillation 227 und für die Einrichtung zum destillativen Abtrennen 220 eine eigene Kolonne zur Raffinatreinigung 228 vorgesehen. Die Einrichtung zum Strippen 230 ist in einer separaten Stripper-Kolonne 226 angeordnet. Vorteile dieses Aufbaus liegen in der niedrigeren Bauhöhe der Kolonne zur Extraktivdestillation 227. Bei praktischen oder genehmigungsrechtlichen Beschränkungen der Bauhöhe der Anlage kann somit bevorzugt auf diesen Aufbau zurückgegriffen werden.

### Bezugszeichenliste

- 1: Einsatzstoffstrom
- 2: Aliphaten-Produktstrom
- 3: Aromaten-Produktstrom
- 4: Lösungsmittel für Aromaten
- 5: Gemisch aus Einsatzstoff und Lösungsmittel
- 6: mit Aromaten angereichertes Lösungsmittel
- 7: Lösungsmittelkreislauf
- 8: Teilstrom des Lösungsmittelkreislaufs
- 9: Extraktionsmittel für Aliphaten
- 10: Raffinat der Flüssig-Flüssig-Extraktion
- 11: Extrakt der Flüssig-Flüssig-Extraktion
- 12: wässrige Phase
- 13: hydrophobe Phase
- 14: Wasser
- 15: Sumpfprodukt der Destillation
- 16: Wasserkreislauf
- 17: Extraktionsmittelkreislauf
- 18: abgetrennte Verunreinigungen

- 100: Verfahren zur Trennung eines kohlenwasserstoffhaltigen Einsatzstoffstroms
- 110: Inkontaktbringen von Einsatzstoffstrom mit Lösungsmittel im Gegenstrom
- 120: Destillatives Abtrennen einer Aliphatenfraktion
- 130: Strippen der Aromaten aus dem Lösungsmittel
- 140: Rückführen des Lösungsmittels
- 150: Aufreinigen des Teilstroms des an Aromaten abgereicherten Lösungsmittels
- 160: Versetzen mit Wasser
- 170: Abscheiden der wässrigen von der hydrophoben Phase
- 180: Destillation der wässrigen Phase
- 190: Abtrennen von Verunreinigungen aus der hydrophoben Phase

- 200: Vorrichtung zur Trennung eines kohlenwasserstoffhaltigen Einsatzstoffstroms
- 210: Einrichtung zum Inkontaktbringen im Gegenstrom
- 220: Einrichtung zum destillativen Abtrennen
- 221: Abführung
- 222: Abzweigung
- 223: Pumpe
- 225, 227: Kolonne zur Extraktivdestillation
- 226: Stripper-Kolonne
- 228: Kolonne zur Raffinatreinigung
- 229: Kolonne zur Extraktivdestillation mit integrierter Strippung
- 230: Einrichtung zum Strippen
- 240: Rückführung für das Lösungsmittel
- 250: Aufreinigungseinrichtung
- 251: Zuführung der Aufreinigungseinrichtung
- 252: Mischkammer
- 253: Trennkammer
- 254: Rückführung für Raffinat
- 255: Abführung für Extrakt
- 260: Lösungsmittel-Rückgewinnungseinrichtung
- 261: Mischvorrichtung
- 262: Scheidevorrichtung
- 263: Abführung für die wässrige Phase
- 270: Destillationskolonne
- 271: Abführung für das Sumpfprodukt
- 272: Kopfabführung
- 273: Kopfbereich
- 274: Vakuumerzeugungseinrichtung
- 280 bis 284: Wärmetauscher
- 285, 286: Wärmeenergie
- 290: Trenneinrichtung

## Patentansprüche

1. Verfahren zur Trennung eines kohlenwasserstoffhaltigen Einsatzstoffstroms (1) durch Extraktivdestillation in mindestens einen Aliphaten-Produktstrom (2) und einen Aromaten-Produktstrom (3), umfassend die folgenden Schritte:
• Inkontaktbringen (110) des Einsatzstoffstroms (1) mit einem wasserlöslichen Lösungsmittel (4) für Aromaten im Gegenstrom,
• Destillatives Abtrennen (120) einer Aliphatenfraktion aus dem erhaltenen Gemisch (5) unter Verbleib des mit Aromaten angereicherten Lösungsmittels (6) und Abführen der Aliphatenfraktion in dem Aliphaten-Produktstrom (2)
• Strippen der Aromaten (130) aus dem mit Aromaten angereicherten Lösungsmittel (6) und Abführen der Aromaten in dem Aromaten-Produktstrom (3)
• Rückführen (140) des an Aromaten abgereicherten Lösungsmittels (4) in einem Lösungsmittelkreislauf (7) zur Extraktion weiterer Aromaten aus dem Einsatzstoffstrom (1), wobei sich als Verunreinigungen aliphatische Verbindungen und/oder Verbindungen mit aliphatischen Resten in dem Lösungsmittelkreislauf (7) ansammeln, und
• Aufreinigen (150) zumindest eines Teilstroms (8) des an Aromaten abgereicherten Lösungsmittels (4) zur Entfernung der Verunreinigungen, wobei zum Aufreinigen (150) eine Flüssig-Flüssig-Extraktion zwischen dem Teilstrom (8) und einem Extraktionsmittel (9) für Aliphaten durchgeführt wird, wobei das Raffinat (10) der Flüssig-Flüssig-Extraktion in den Lösungsmittelkreislauf (7) zurückgeführt wird und
wobei zur Rückgewinnung von Lösungsmittel aus einem Extrakt (11) der Flüssig-Flüssig-Extraktion die folgenden weiteren Schritte durchgeführt werden:
• Versetzen (160) des Extraktes (11) der Flüssig-Flüssig-Extraktion mit Wasser (14) unter Ausbildung einer wässrigen, lösungsmittelhaltigen Phase (12) und einer hydrophoben Phase (13),
• Abscheiden (170) der wässrigen Phase (12) von der hydrophoben Phase (13), **dadurch gekennzeichnet, dass** eine Destillation (180) der wässrigen Phase (12) zur Abdestillation von Wasser erfolgt, wobei das Sumpfprodukt (15) der Destillation (180) in den Lösungsmittelkreislauf (7) zurückgeführt wird und das abdestillierte Wasser (14) in einem Wasserkreislauf (16) zurückgeführt und erneut dem Extrakt (11) der Flüssig-Flüssig-Extraktion zugesetzt wird.

2. Verfahren nach Anspruch 1, **dadurch gekennzeichnet, dass** der Teilstrom (8) vor der Flüssig-Flüssig-Extraktion in einem Wärmetauscher (280) abgekühlt wird und die Destillation (180) unter Einsatz der im Wärmetauscher (280) anfallenden Wärmeenergie (285) durchgeführt wird.

3. Verfahren nach einem der Ansprüche 1 oder 2, **dadurch gekennzeichnet, dass** die Destillation (180) mit einem Kopfdruck von kleiner 1 bar (a), bevorzugt kleiner 500 mbar (a) und besonders bevorzugt kleiner 100 mbar (a) durchgeführt wird.

4. Verfahren nach einem der Ansprüche 1 bis 3, **dadurch gekennzeichnet, dass** das ein Abtrennen (190) der Verunreinigungen aus der hydrophoben Phase (13) durchgeführt wird.

5. Verfahren nach einem der Ansprüche 1 bis 4, **dadurch gekennzeichnet, dass** das die hydrophobe Phase (13) dem Aliphaten-Produktstrom (2) zugeführt wird oder als Extraktionsmittel (9) für Aliphaten in einem Extraktionsmittelkreislauf (17) in die Flüssig-Flüssig-Extraktion zurückgeführt wird.

6. Verfahren nach einem der Ansprüche 1 bis 5, **dadurch gekennzeichnet, dass** das Lösungsmittel (4) im Lösungsmittelkreislauf (7) einen Wassergehalt von kleiner 3 Massen-%, bevorzugt kleiner 1 Massen-% und besonders bevorzugt kleiner 1000 ppm hat.

7. Verfahren nach einem der Ansprüche 1 bis 6, **dadurch gekennzeichnet, dass** das Lösungsmittel (4, 6) N-Formylmorpholin enthält.

8. Vorrichtung zur Trennung eines kohlenwasserstoffhaltigen Einsatzstoffstroms (1) durch Extraktivdestillation in mindestens einen Aliphaten-Produktstrom (2) und einen Aromaten-Produktstrom (3), umfassend:
• eine Einrichtung zum Inkontaktbringen im Gegenstrom (210) des Einsatzstoffstroms mit einem wasserlöslichen Lösungsmittel (4) für Aromaten,
• eine Einrichtung zum destillativen Abtrennen einer Aliphatenfraktion (220) aus dem erhaltenen Gemisch (5) unter Verbleib des mit Aromaten angereicherten Lösungsmittels (6) mit einer Abführung (221) für die Aliphatenfraktion als Aliphaten-Produktstrom (2),
• eine Einrichtung zum Strippen (230) der Aromaten aus dem mit Aromaten angereicherten Lösungsmittel (6) mit einer Abführung für die Aromaten als Aromaten-Produktstrom,
• eine Rückführung (240) für das an Aromaten abgereicherte Lösungsmittel (4) in einem Lösungsmittelkreislauf (7) zu der Einrichtung zum Inkontaktbringen im Gegenstrom (210) des Einsatzstoffstroms (1) mit Lösungsmittel (4), sowie
• eine Aufreinigungseinrichtung (250) für das Lösungsmittel (4), die in dem Lösungsmittelkreislauf (7) angeordnet ist und im Betrieb zumindest zeitweilig zumindest von einem Teilstrom (8) des an Aromaten abgereicherten Lösungsmittels (4) durchlaufen wird, zur Entfernung von Verunreinigungen umfassend aliphatische Verbindungen und/oder Verbindungen mit aliphatischen Resten aus dem Teilstrom (8), wobei
die Aufreinigungseinrichtung (250) eine Zuführung (251) für ein Extraktionsmittel (9) für Aliphaten und zumindest eine Mischkammer (252) und eine Trennkammer (253) für eine Flüssig-Flüssig-Extraktion zwischen dem Teilstrom (8) und dem Extraktionsmittel (9) für Aliphaten enthält,
die Aufreinigungseinrichtung (250) eine Rückführung (254) für ein Raffinat (10) der Flüssig-Flüssig-Extraktion in den Lösungsmittelkreislauf (7) aufweist, und
die Aufreinigungsvorrichtung (250) eine Abführung (255) für einen Extrakt (11) der Flüssig-Flüssig-Extraktion aufweist, die mit einer Lösungsmittel-Rückgewinnungseinrichtung (260) verbunden ist, in welcher mindestens eine Mischvorrichtung (261) für den Zusatz von Wasser (14) unter Ausbildung einer wässrigen Phase (12) und einer hydrophoben Phase(13) und mindestens eine Scheidevorrichtung (262) zur Abscheidung der wässrigen Phase (12) von der hydrophoben Phase (13) angeordnet sind,
**dadurch gekennzeichnet, dass**
die Lösungsmittel-Rückgewinnungseinrichtung (260) eine Abführung (263) für die wässrige Phase (12) aufweist, die mit einer Destillationskolonne (270) zur Abdestillation des Wassers (14) verbunden ist,
wobei die Destillationskolonne (270) eine Abführung (271) für ein Sumpfprodukt (15) der Destillationskolonne (270), über die das Sumpfprodukt (15) in den Lösungsmittelkreislauf (7) zurückführbar ist und eine Kopfabführung (272) für das abdestillierte Wasser (14) aufweist, die unter Ausbildung eines Wasserkreislaufs (16) mit der Mischvorrichtung (261) für den Zusatz von Wasser (14) verbunden ist.

9. Vorrichtung nach Anspruch 8, **dadurch gekennzeichnet, dass** stromaufwärts der Aufreinigungsvorrichtung (250) mindestens ein Wärmetauscher (280) zur Abkühlung des Teilstroms (8) angeordnet ist, der mit der Destillationskolonne (270) zur Übertragung der in dem Wärmetauscher (280) anfallenden Wärmeenergie (285) verbunden ist.

10. Vorrichtung nach einem der Ansprüche 8 oder 9, **dadurch gekennzeichnet, dass** die Destillationskolonne (270) mit einer Vakuumerzeugungseinrichtung (274) verbunden ist, die dazu eingerichtet ist, einen Unterdruck von kleiner 1 bar (a), bevorzugt kleiner 500 mbar (a) und besonders bevorzugt kleiner 100 mbar (a) in einem Kopfbereich (273) der Destillationskolonne (270) zu erzeugen.

11. Vorrichtung nach einem der Ansprüche 8 bis 10, **dadurch gekennzeichnet, dass** eine Trenneinrichtung (290) zur Abtrennung der Verunreinigungen aus der hydrophoben Phase (13) vorgesehen ist.

12. Vorrichtung nach Anspruch 11, **dadurch gekennzeichnet, dass** die Trenneinrichtung (290) unter Ausbildung eines Extraktionsmittelkreislaufs (17) mit der Zuführung (251) der Aufreinigungseinrichtung (250) verbunden ist.

## Claims

1. Process for separating a hydrocarbon-containing feed stream (1) by extractive distillation into at least one aliphatic product stream (2) and one aromatic product stream (3), comprising the following steps:
• Bringing the feed stream (1) into contact (110) with a water-soluble solvent (4) for aromatics in countercurrent,
• Distillative separation (120) of an aliphatic fraction from the mixture obtained (5), leaving behind the solvent enriched with aromatics (6), and removal of the aliphatic fraction in the aliphatic product stream (2)
• Stripping the aromatics (130) from the solvent enriched with aromatics (6) and discharging the aromatics in the aromatics product stream (3)
• Returning (140) the solvent depleted of aromatics (4) in a solvent circuit (7) for the extraction of further aromatics from the feed stream (1), whereby aliphatic compounds and/or compounds with aliphatic residues accumulate as impurities in the solvent circuit (7), and
• Purifying (150) at least one partial stream (8) of the solvent (4) depleted of aromatics to remove the impurities, wherein the purification (150) is carried out by means of a liquid-liquid extraction between the partial stream (8) and an extraction agent (9) for aliphatic compounds, the raffinate (10) of the liquid-liquid extraction being returned to the solvent circuit (7), and
the following further steps being carried out to recover solvent from an extract (11) of the liquid-liquid extraction:
• Mixing (160) the extract (11) from the liquid-liquid extraction with water (14) to form an aqueous, solvent-containing phase (12) and a hydrophobic phase (13),
• separating (170) the aqueous phase (12) from the hydrophobic phase (13), **characterized in that** the aqueous phase (12) is distilled (180) to remove water, the bottom product (15) of the distillation (180) is returned to the solvent circuit (7) and the distilled water (14) is returned in a water circuit (16) and added again to the extract (11) of the liquid-liquid extraction.

2. Method according to claim 1, **characterized in that** the partial stream (8) is cooled in a heat exchanger (280) prior to the liquid-liquid extraction, and the distillation (180) is carried out using the heat energy (285) generated in the heat exchanger (280).

3. Method according to one of claims 1 or 2, **characterized in that** the distillation (180) is carried out at a head pressure of less than 1 bar (a), preferably less than 500 mbar (a) and particularly preferably less than 100 mbar (a).

4. Method according to one of claims 1 to 3, **characterized in that** the separation (190) of the impurities from the hydrophobic phase (13) is carried out.

5. Method according to one of claims 1 to 4, **characterized in that** the hydrophobic phase (13) is fed to the aliphatic product stream (2) or is returned to the liquid-liquid extraction as an extraction agent (9) for aliphatics in an extraction agent circuit (17).

6. Method according to one of claims 1 to 5, **characterized in that** the solvent (4) in the solvent circuit (7) has a water content of less than 3% by mass, preferably less than 1% by mass, and particularly preferably less than 1000 ppm.

7. Method according to one of claims 1 to 6, **characterized in that** the solvent (4, 6) contains N-formylmorpholine.

8. Device for separating a hydrocarbon-containing feed stream (1) by extractive distillation into at least one aliphatic product stream (2) and one aromatic product stream (3), comprising:
• a device for bringing the feed stream into countercurrent contact (210) with a water-soluble solvent (4) for aromatics,
• a device for distillatively separating an aliphatic fraction (220) from the mixture obtained (5), leaving the solvent enriched with aromatics (6) with a discharge (221) for the aliphatic fraction as an aliphatic product stream (2),
• a device for stripping (230) the aromatics from the solvent (6) enriched with aromatics, with a discharge for the aromatics as an aromatics product stream,
• a recirculation line (240) for the solvent (4) depleted in aromatics in a solvent circuit (7) to the device for bringing the feed stream (1) into countercurrent contact (210) with solvent (4), and
• a purification device (250) for the solvent (4), which is arranged in the solvent circuit (7) and, during operation, is at least temporarily traversed by at least a partial stream (8) of the solvent (4) depleted of aromatics, for removing impurities comprising aliphatic compounds and/or compounds with aliphatic residues from the partial stream (8),
wherein
the purification device (250) contains a feed (251) for an extraction agent (9) for aliphatic compounds and at least one mixing chamber (252) and one separation chamber (253) for liquid-liquid extraction between the partial stream (8) and the extraction agent (9) for aliphatic compounds,
the purification device (250) has a return line (254) for a raffinate (10) from the liquid-liquid extraction into the solvent circuit (7), and
the purification device (250) has a discharge line (255) for an extract (11) from the liquid-liquid extraction, which is connected to a solvent recovery device (260) in which at least one mixing device (261) for the addition of water (14) to form an aqueous phase (12) and a hydrophobic phase (13) and at least one separating device (262) for separating the aqueous phase (12) from the hydrophobic phase (13) are arranged,
**characterized in that**
the solvent recovery device (260) has a discharge (263) for the aqueous phase (12), which is connected to a distillation column (270) for distilling off the water (14), wherein the distillation column (270) has a discharge (271) for a bottom product (15) of the distillation column (270), via which the bottom product (15) can be returned to the solvent circuit (7), and a head outlet (272) for the distilled water (14), which is connected to the mixing device (261) for the addition of water (14), forming a water circuit (16).

9. Device according to claim 8, **characterized in that** upstream of the purification device (250) there is arranged at least one heat exchanger (280) for cooling the partial stream (8), which is connected to the distillation column (270) for transferring the heat energy (285) generated in the heat exchanger (280).

10. Device according to one of claims 8 or 9, **characterized in that** the distillation column (270) is connected to a vacuum generating device (274) which is designed to generate a negative pressure of less than 1 bar (a), preferably less than 500 mbar (a) and particularly preferably less than 100 mbar (a) in a head region (273) of the distillation column (270).

11. Device according to one of claims 8 to 10, **characterized in that** a separating device (290) is provided for separating the impurities from the hydrophobic phase (13).

12. Device according to claim 11, **characterized in that** the separating device (290) is connected to the feed (251) of the purification device (250), forming an extraction agent circuit (17).

## Revendications

1. Procédé de séparation d'un flux de matière première contenant des hydrocarbures (1) par distillation extractive en au moins un flux de produit aliphatique (2) et un flux de produit aromatique (3), comprenant les étapes suivantes :
• mise en contact (110) du flux de charge d'alimentation (1) avec un solvant hydrosoluble (4) pour les aromatiques à contre-courant,
• Séparation par distillation (120) d'une fraction aliphatique du mélange obtenu (5) tout en conservant le solvant enrichi en aromatiques (6) et évacuation de la fraction aliphatique dans le flux de produit aliphatique (2)
• Stripping des aromatiques (130) du solvant enrichi en aromatiques (6) et évacuation des aromatiques dans le flux de produit aromatique (3)
• Recyclage (140) du solvant appauvri en aromatiques (4) dans un circuit de solvant (7) pour extraire d'autres aromatiques du flux de matière première (1), des composés aliphatiques et/ou des composés avec des résidus aliphatiques s'accumulant sous forme d'impuretés dans le circuit de solvant (7), et
• purification (150) d'au moins un courant partiel (8) du solvant appauvri en aromatiques (4) pour éliminer les impuretés, la purification (150) étant réalisée par une extraction liquide-liquide entre le courant partiel (8) et un agent d'extraction (9) pour les composés aliphatiques, le raffinat (10) de l'extraction liquide-liquide étant renvoyé dans le circuit de solvant (7) et
les étapes supplémentaires suivantes étant réalisées pour récupérer le solvant à partir d'un extrait (11) de l'extraction liquide-liquide :
• mélange (160) de l'extrait (11) de l'extraction liquide-liquide avec de l'eau (14) pour former une phase aqueuse contenant du solvant (12) et une phase hydrophobe (13),
• séparation (170) de la phase aqueuse (12) de la phase hydrophobe (13), **caractérisé en ce qu'une** distillation (180) de la phase aqueuse (12) est effectuée pour distiller l'eau, le produit de fond (15) de la distillation (180) est renvoyé dans le circuit de solvant (7) et l'eau distillée (14) est renvoyée dans un circuit d'eau (16) et ajoutée à nouveau à l'extrait (11) de l'extraction liquide-liquide.

2. Procédé selon la revendication 1, **caractérisé en ce que** le courant partiel (8) est refroidi dans un échangeur de chaleur (280) avant l'extraction liquide-liquide et la distillation (180) est effectuée en utilisant l'énergie thermique (285) produite dans l'échangeur de chaleur (280).

3. Procédé selon l'une des revendications 1 ou 2, **caractérisé en ce que** la distillation (180) est effectuée à une pression de tête inférieure à 1 bar (a), de préférence inférieure à 500 mbar (a) et de manière particulièrement préférée inférieure à 100 mbar (a).

4. Procédé selon l'une des revendications 1 à 3, **caractérisé en ce que** la séparation (190) des impuretés de la phase hydrophobe (13) est effectuée.

5. Procédé selon l'une des revendications 1 à 4, **caractérisé en ce que** la phase hydrophobe (13) est ajoutée au flux de produit aliphatique (2) ou est renvoyée dans l'extraction liquide-liquide en tant qu'agent d'extraction (9) pour les aliphatiques dans un circuit d'agent d'extraction (17).

6. Procédé selon l'une des revendications 1 à 5, **caractérisé en ce que** le solvant (4) dans le circuit de solvant (7) a une teneur en eau inférieure à 3 % en masse, de préférence inférieure à 1 % en masse et de manière particulièrement préférée inférieure à 1000 ppm.

7. Procédé selon l'une des revendications 1 à 6, **caractérisé en ce que** le solvant (4, 6) contient de la N-formylmorpholine.

8. Dispositif pour séparer un flux de matière première contenant des hydrocarbures (1) par distillation extractive en au moins un flux de produit aliphatique (2) et un flux de produit aromatique (3), comprenant:
• un dispositif pour mettre en contact à contre-courant (210) le flux de matière première avec un solvant hydrosoluble (4) pour les aromatiques,
• un dispositif pour séparer par distillation une fraction aliphatique (220) du mélange obtenu (5) tout en conservant le solvant enrichi en aromatiques (6) avec une évacuation (221) pour la fraction aliphatique sous forme de flux de produit aliphatique (2),
• un dispositif pour extraire (230) les composés aromatiques du solvant enrichi en composés aromatiques (6) avec une évacuation pour les composés aromatiques sous forme de flux de produit aromatique,
• un retour (240) pour le solvant (4) appauvri en aromatiques dans un circuit de solvant (7) vers le dispositif pour mettre en contact à contre-courant (210) le flux de matière première (1) avec le solvant (4), ainsi que
• un dispositif de purification (250) pour le solvant (4), qui est disposé dans le circuit de solvant (7) et qui, pendant le fonctionnement, est traversé au moins temporairement par au moins un flux partiel (8) du solvant (4) appauvri en aromatiques, afin d'éliminer du flux partiel (8) les impuretés comprenant des composés aliphatiques et/ou des composés avec des radicaux aliphatiques, le dispositif de purification (250) comprenant une alimentation (251) pour un agent d'extraction (9) pour les composés aliphatiques et au moins une chambre de mélange (252) et une chambre de séparation (253) pour une extraction liquide-liquide entre le courant partiel (8) et l'agent d'extraction (9) pour les composés aliphatiques,
le dispositif de purification (250) comportant un retour (254) pour un raffinat (10) de l'extraction liquide-liquide dans le circuit de solvant (7), et
le dispositif de purification (250) comportant une évacuation (255) pour un extrait (11) de l'extraction liquide-liquide, qui est reliée à un dispositif de récupération de solvant (260) dans lequel sont disposés au moins un dispositif de mélange (261) pour l'ajout d'eau (14) avec formation d'une phase aqueuse (12) et d'une phase hydrophobe (13) et au moins un dispositif de séparation (262) pour séparer la phase aqueuse (12) de la phase hydrophobe (13),
**caractérisé en ce que**
le dispositif de récupération de solvant (260) comporte une évacuation (263) pour la phase aqueuse (12), qui est reliée à une colonne de distillation (270) pour la distillation de l'eau (14),
la colonne de distillation (270) comportant une évacuation (271) pour un produit de fond (15) de la colonne de distillation (270), par lequel le produit de fond (15) peut être renvoyé dans le circuit de solvant (7), et une évacuation de tête (272) pour l'eau distillée (14), qui est reliée au dispositif de mélange (261) pour l'ajout d'eau (14) en formant un circuit d'eau (16).

9. Dispositif selon la revendication 8, **caractérisé en ce qu'au** moins un échangeur de chaleur (280) est disposé en amont du dispositif de purification (250) pour refroidir le flux partiel (8), lequel est relié à la colonne de distillation (270) pour transférer l'énergie thermique (285) produite dans l'échangeur de chaleur (280).

10. Dispositif selon l'une des revendications 8 ou 9, **caractérisé en ce que** la colonne de distillation (270) est reliée à un dispositif de génération de vide (274) qui est conçu pour générer une dépression inférieure à 1 bar (a), de préférence inférieure à 500 mbar (a) et de manière particulièrement préférée inférieure à 100 mbar (a) dans une zone de tête (273) de la colonne de distillation (270).

11. Dispositif selon l'une des revendications 8 à 10, **caractérisé en ce qu'un** dispositif de séparation (290) est prévu pour séparer les impuretés de la phase hydrophobe (13).

12. Dispositif selon la revendication 11, **caractérisé en ce que** le dispositif de séparation (290) est relié à l'alimentation (251) du dispositif de purification (250) en formant un circuit d'agent d'extraction (17).
